# EUROPEAN PATENT APPLICATION

(11) **EP 4 694 029 A1**
(43) Date of publication of application: **11.02.2026**
(21) Application number: 23937313.7
(22) Date of filing: 18.12.2023
(51) Int. Cl.: H04L 9/32

(54) **CERTIFICATE MANAGEMENT METHOD AND RELATED APPARATUS**

(30) Priority: 15.05.2023 CN 202310545750; 15.06.2023 CN 202310715320
(71) Applicant: Huawei Technologies Co., Ltd., Shenzhen, Guangdong 518129 (CN)
(72) Inventor: GENG, Feng, Shenzhen, Guangdong 518129 (CN); CHEN, Xin, Shenzhen, Guangdong 518129 (CN)
(74) Representative: Maiwald GmbH
(86) International application number: PCT/CN2023/139453
(87) International publication number: WO 2024/234642

(57) **Abstract**

A certificate management method is provided, and is applied to a scenario in which a digital certificate is automatically issued. In the method, in a digital certificate application process, a trusted identity provider is introduced to authenticate a certificate application identity and obtain a public key corresponding to the certificate application identity, so as to compare whether the public key corresponding to the certificate application identity is the same as a public key in a certificate signing request, thereby ensuring consistency between the certificate application identity and the public key, preventing the public key from being tampered with in a phase of submitting the certificate signing request, avoiding a case in which identity information in an issued digital certificate does not match the public key, and improving security in a digital certificate issuance process.

## Description

This application claims priority to Chinese Patent Application No. 202310545750.6, filed with the China National Intellectual Property Administration on May 15, 2023 and entitled "METHOD FOR VERIFYING IDENTITY CONSISTENCY", and to Chinese Patent Application No. 202310715320.4, filed with the China National Intellectual Property Administration on June 15, 2023, and entitled "CERTIFICATE MANAGEMENT METHOD AND RELATED APPARATUS", both of which are incorporated herein by reference in their entireties.

### TECHNICAL FIELD

This application relates to the field of computer security technologies, and in particular, to a certificate management method and a related apparatus.

### BACKGROUND

In cryptography, a public key infrastructure binds a personal identity of a user to a public key through a certificate authority (Certificate Authority, CA). The CA issues a digital certificate to each user who uses a public key. A purpose of the digital certificate is to prove that the user listed in the certificate legitimately owns the public key listed in the certificate.

To obtain a digital certificate issued by the CA, a user usually needs to apply to the CA for the digital certificate, and the CA authenticates a user identity. The CA issues the digital certificate to the user only after the user identity is authenticated. Currently, to improve certificate issuance efficiency, an automatic certificate issuance solution is proposed in a related technology, so that an identity of a certificate applicant does not need to be authenticated manually. In the related technology, the certificate applicant proves ownership of a certificate application identity (for example, ownership of a domain name or an email address) of the certificate applicant, so that the CA issues a corresponding digital certificate to the certificate applicant, and an entire certificate issuance process is automatically completed without manual intervention.

However, currently, this automatic certificate issuance solution is merely to verify the ownership of the certificate application identity of the certificate applicant, and there is still a security risk.

### SUMMARY

This application provides a certificate management method, to improve security in a digital certificate issuance process.

A first aspect of this application provides a certificate management method, applied to a certificate issuance device. In the method, the certificate issuance device obtains a certificate application request sent by a certificate application device, where the certificate application request is used to request the certificate issuance device to issue a digital certificate to the certificate application device.

Then, based on the certificate application request, the certificate issuance device sends challenge information to the certificate application device, where the challenge information indicates the certificate application device to perform identity authentication by using an identity provider (Identity Provider, IDP). The IDP is a device trusted by the certificate issuance device, and a mapping relationship between identity information and a public key is prestored in the IDP.

Then, after an identity of the certificate application device is authenticated by the IDP, the certificate issuance device obtains a first public key sent by the IDP, where a mapping relationship exists between the first public key and an identity corresponding to the certificate application request. In other words, the IDP returns the corresponding first public key to the certificate issuance device based on identity information verified by the certificate application device.

The certificate issuance device obtains a certificate signing request sent by the certificate application device, where the certificate signing request includes a second public key, and the certificate signing request is used to request to issue a digital certificate including the second public key. In other words, the certificate signing request is a request for triggering the certificate issuance device to issue the digital certificate after identity authentication of the certificate application device succeeds.

Finally, the certificate issuance device compares the first public key returned by the IDP with the second public key in the certificate signing request, to determine whether the identity of the certificate application device that requests to issue the digital certificate matches the public key. Moreover, the certificate issuance device issues, in response to the first public key being the same as the second public key, the digital certificate including the second public key to the certificate application device.

In this solution, in a digital certificate application process, a trusted IDP is introduced to authenticate a certificate application identity and obtain a public key corresponding to the certificate application identity, so as to compare whether the public key corresponding to the certificate application identity is the same as the public key in the certificate signing request, thereby ensuring consistency between the certificate application identity and the public key, preventing the public key from being tampered with in a phase of submitting the certificate signing request, avoiding a case in which identity information in an issued digital certificate does not match the public key, and improving security in a digital certificate issuance process.

In a possible implementation, the certificate application request includes a third public key, and the third public key is a public key that the certificate application device requests to be included in a digital certificate. In other words, the certificate application request sent by the certificate application device at the beginning needs to specify the public key that needs to be included in the digital certificate applied for.

After the certificate issuance device receives the first public key sent by the IDP, the certificate issuance device first compares the first public key with the third public key, and when the third public key is the same as the first public key, sends a response message to the certificate application device, where the response message indicates that identity authentication of the certificate application device succeeds. In this way, after receiving the response message, the certificate application device triggers sending of the certificate signing request to the certificate issuance device.

In addition, that the first public key is the same as the second public key is determined by comparing the third public key with the second public key. In other words, the certificate issuance device determines, by comparing whether the third public key in the certificate application request is the same as the second public key in the certificate signing request, whether the first public key is the same as the second public key.

In this solution, the certificate issuance device no longer needs to store the first public key returned by the IDP, but sequentially compares the first public key with the third public key in the certificate application request and the third public key with the second public key in the certificate signing request, so that consistency between the certificate application identity and the public key can be verified. This improves security in the certificate issuance process, minimizes modifications to the conventional technology, and improves compatibility of the solution.

In a possible implementation, the certificate application request includes first identity information, and the certificate signing request includes second identity information. In other words, the certificate application request includes both the third public key and the first identity information, and the certificate signing request includes both the second public key and the second identity information. In addition, the certificate issuance device further obtains third identity information sent by the IDP, where a mapping relationship exists between the third identity information and the first public key.

In this case, in addition to comparing public keys obtained in various ways, the certificate issuance device also needs to compare identity information obtained in various ways. The certificate issuance device issues the digital certificate to the certificate application device only when the public keys and identity information obtained in various ways are the same. In other words, the certificate issuance device issues, in response to the first public key being the same as the second public key and the first identity information being the same as both the second identity information and the third identity information, the digital certificate including the second public key and the second identity information to the certificate application device.

In this solution, when both the certificate application request and the certificate signing request include the public key and the identity information, the certificate issuance device compares the public keys and the identity information that are obtained in various ways before issuing the digital certificate, to ensure that the public key and the identity information that are indicated by the certificate application device in the digital certificate application process match the public key and the identity information of the certificate application device that are actually successfully verified, thereby ensuring security of the digital certificate issued by the certificate issuance device.

In a possible implementation, the third public key and the first identity information are carried in a same identifier. The identifier in which the third public key and the first identity information are located indicates content of the certificate application device that needs to be verified in a challenge process. In other words, in the challenge process performed by the certificate application device, the certificate issuance device actually verifies content carried in the identifier in the certificate application request.

In this solution, a new type of identifier is defined in the certificate application request, so that the identifier can indicate the public key and the identity information. In this way, on a basis of implementing verification on the public key and the identity information, modifications to the conventional technology can be minimized, and compatibility of the solution can be improved.

In a possible implementation, after sending the challenge information to the certificate application device, the certificate issuance device obtains an access request sent by the certificate application device, where the access request is used to request to access the IDP, and the access request includes identity information corresponding to the certificate application request. Based on the access request, the certificate issuance device redirects the certificate application device to the IDP, so that the certificate application device performs identity authentication by using the IDP.

In this solution, the certificate issuance device obtains the access request sent by the certificate application device, and redirects the certificate application device to the IDP based on the access request, so that it can be ensured that information such as a public key fed back by the IDP is subsequently associated with the certificate application device, thereby confirming an identity authentication process of the certificate application device.

In a possible implementation, the IDP is configured to store a mapping relationship between identity information and a public key, and the IDP is configured to verify whether the identity corresponding to the certificate application request has a private key corresponding to the first public key, to implement identity authentication on the certificate application device.

In this solution, consistency between the identity corresponding to the certificate application device and the public key can be verified by checking whether the certificate application device has control over the private key corresponding to the public key. In this way, it is ensured that the digital certificate obtained in the subsequent application matches the application identity and the public key.

In a possible implementation, the IDP supports any one or more of the following identity authentication modes: zero-knowledge proof, public key signature, and identity authentication based on an asymmetric password-authenticated key exchange protocol. Based on these identity authentication modes, the certificate application device neither needs to return information about the private key to the IDP, nor logs in to the IDP by using a plaintext password, thereby avoiding leakage of privacy information and ensuring security in the identity authentication process.

In a possible implementation, the challenge information sent by the certificate issuance device includes information about a plurality of IDPs, and the challenge information indicates the certificate application device to perform identity authentication by using any IDP. The information about the plurality of IDPs is indicated in the challenge information, so that the certificate application device can select any IDP to complete identity authentication. This ensures diversity of selections by the certificate application device, and ensures that the certificate application device can effectively perform the identity authentication process.

A second aspect of this application provides a certificate management method, applied to a certificate application device. The method includes the following steps: The certificate application device sends a certificate application request to a certificate issuance device, where the certificate application request is used to apply for a digital certificate. Then the certificate application device obtains challenge information sent by the certificate issuance device, where the challenge information indicates to perform identity authentication by using an IDP. Based on the challenge information, the certificate application device performs identity authentication by using the IDP, so that the IDP determines a first public key in a mapping relationship with an identity corresponding to the certificate application request. After identity authentication succeeds, the certificate application device sends a certificate signing request to the certificate issuance device, where the certificate signing request includes a second public key, the certificate signing request is used to request to issue a digital certificate including the second public key, and the second public key is the same as the first public key. Finally, the certificate application device obtains the digital certificate that includes the second public key and that is sent by the certificate issuance device.

In a possible implementation, the certificate application request includes a third public key, and the third public key is the same as both the first public key and the second public key.

In a possible implementation, the certificate application request includes first identity information, the certificate signing request includes second identity information, and the first identity information is the same as the second identity information.

In a possible implementation, the third public key and the first identity information are carried in a same identifier.

In a possible implementation, the IDP is configured to store a mapping relationship between identity information and a public key; and performing identity authentication by using the IDP includes: logging in to the IDP based on the first identity information; obtaining an identity authentication request sent by the IDP, where the identity authentication request is used to request to verify a private key corresponding to the first identity information; and completing identity authentication in cooperation with the IDP based on the identity authentication request.

In a possible implementation, the identity authentication request includes an identity authentication mode supported by the IDP, and the identity authentication request is used to request to perform identity authentication based on any identity authentication mode supported by the IDP; and
the IDP supports any one or more of the following identity authentication modes: zero-knowledge proof, public key signature, and identity authentication based on an asymmetric password-authenticated key exchange protocol.

In a possible implementation, the challenge information includes information about a plurality of IDPs, and the challenge information indicates the certificate application device to perform identity authentication by using any IDP.

A third aspect of this application provides a certificate issuance device, including: an obtaining module, configured to obtain a certificate application request sent by a certificate application device, where the certificate application request is used to apply for a digital certificate; and a sending module, configured to send challenge information to the certificate application device, where the challenge information indicates the certificate application device to perform identity authentication by using an IDP, where the obtaining module is further configured to obtain a first public key sent by the IDP, where a mapping relationship exists between the first public key and an identity corresponding to the certificate application request; the obtaining module is further configured to obtain a certificate signing request sent by the certificate application device, where the certificate signing request includes a second public key, and the certificate signing request is used to request to issue a digital certificate including the second public key; and the sending module is further configured to issue, in response to the first public key being the same as the second public key, the digital certificate including the second public key to the certificate application device.

In a possible implementation, the certificate application request includes a third public key; and the sending module is further configured to send a response message to the certificate application device in response to the third public key being the same as the first public key, where the response message indicates that identity authentication of the certificate application device succeeds, where that the first public key is the same as the second public key is determined by comparing the third public key with the second public key.

In a possible implementation, the certificate application request includes first identity information, and the certificate signing request includes second identity information; the obtaining module is further configured to obtain third identity information sent by the IDP; and the sending module is further configured to issue, in response to the first public key being the same as the second public key and the first identity information being the same as both the second identity information and the third identity information, the digital certificate including the second public key and the second identity information to the certificate application device.

In a possible implementation, the third public key and the first identity information are carried in a same identifier.

In a possible implementation, the obtaining module is further configured to obtain an access request sent by the certificate application device, where the access request is used to request to access the IDP, and the access request includes identity information corresponding to the certificate application request; and the sending module is further configured to redirect the certificate application device to the IDP.

In a possible implementation, the IDP is configured to store a mapping relationship between identity information and a public key, and the IDP is configured to verify whether the identity corresponding to the certificate application request has a private key corresponding to the first public key.

In a possible implementation, the IDP supports any one or more of the following identity authentication modes: zero-knowledge proof, public key signature, and identity authentication based on an asymmetric password-authenticated key exchange protocol.

In a possible implementation, the challenge information includes information about a plurality of IDPs, and the challenge information indicates the certificate application device to perform identity authentication by using any IDP.

A fourth aspect of this application provides a certificate application device, including: a sending module, configured to send a certificate application request to a certificate issuance device, where the certificate application request is used to apply for a digital certificate; an obtaining module, configured to obtain challenge information sent by the certificate issuance device, where the challenge information indicates to perform identity authentication by using an IDP; and an authentication module, configured to perform identity authentication by using the IDP, so that the IDP determines a first public key in a mapping relationship with an identity corresponding to the certificate application request, where the sending module is further configured to send a certificate signing request to the certificate issuance device, where the certificate signing request includes a second public key, the certificate signing request is used to request to issue a digital certificate including the second public key, and the second public key is the same as the first public key; and the obtaining module is further configured to obtain the digital certificate that includes the second public key and that is sent by the certificate issuance device.

In a possible implementation, the certificate application request includes a third public key, and the third public key is the same as both the first public key and the second public key.

In a possible implementation, the certificate application request includes first identity information, the certificate signing request includes second identity information, and the first identity information is the same as the second identity information.

In a possible implementation, the third public key and the first identity information are carried in a same identifier.

In a possible implementation, the IDP is configured to store a mapping relationship between identity information and a public key; and the authentication module is specifically configured to: log in to the IDP based on the first identity information; obtain an identity authentication request sent by the IDP, where the identity authentication request is used to request to verify a private key corresponding to the first identity information; and complete identity authentication in cooperation with the IDP based on the identity authentication request.

In a possible implementation, the identity authentication request includes an identity authentication mode supported by the IDP, and the identity authentication request is used to request to perform identity authentication based on any identity authentication mode supported by the IDP; and the IDP supports any one or more of the following identity authentication modes: zero-knowledge proof, public key signature, and identity authentication based on an asymmetric password-authenticated key exchange protocol.

In a possible implementation, the challenge information includes information about a plurality of IDPs, and the challenge information indicates the certificate application device to perform identity authentication by using any IDP.

A fifth aspect of this application provides an electronic device, including a processor and a memory. The memory is configured to store computer instructions. When the processor executes the instructions, the electronic device is enabled to perform the method according to any one of the foregoing aspects. The electronic device may be the certificate issuance device in the third aspect or the certificate application device in the fourth aspect.

A sixth aspect of this application provides a certificate management system, including the certificate issuance device according to any implementation of the third aspect, the certificate application device according to any implementation of the fourth aspect, and an IDP.

A seventh aspect of this application provides a computer-readable storage medium. The computer-readable storage medium stores instructions. When the instructions are run on an electronic device, the electronic device may be enabled to perform the method according to any one of the foregoing aspects.

An eighth aspect of this application provides a computer program product including instructions. When the instructions are run on an electronic device, the electronic device may be enabled to perform the method according to any one of the foregoing aspects.

A ninth aspect of this application provides a chip. The chip includes a processor and a communication interface. The communication interface is configured to communicate with a module other than the chip. The processor is configured to run a computer program or instructions, so that an apparatus in which the chip is installed can perform the method according to any one of the foregoing aspects.

For technical effects brought by any design of the second aspect to the ninth aspect, refer to the technical effects brought by different implementations of the first aspect. Details are not described herein again.

### BRIEF DESCRIPTION OF DRAWINGS

FIG. 1 is a diagram of a PKI architecture according to an embodiment of this application;
FIG. 2 is a diagram of an ACME-based PKI architecture according to an embodiment of this application;
FIG. 3 is a diagram of an interaction procedure based on an ACME protocol according to an embodiment of this application;
FIG. 4 is a diagram in which an ACME client agent tampers with a public key according to an embodiment of this application;
FIG. 5 is a diagram of an architecture of an application scenario according to an embodiment of this application;
FIG. 6 is a diagram of a structure of an electronic device 601 according to an embodiment of this application;
FIG. 7 is a schematic flowchart of a certificate management method according to an embodiment of this application;
FIG. 8 is a schematic flowchart for performing identity authentication on a certificate application device based on zero-knowledge proof according to an embodiment of this application;
FIG. 9 is a schematic flowchart in which a certificate application device performs identity authentication based on an indication of a certificate issuance device by using an IDP according to an embodiment of this application;
FIG. 10 is another schematic flowchart in which a certificate application device performs identity authentication based on an indication of a certificate issuance device by using an IDP according to an embodiment of this application;
FIG. 11A and FIG. 11B are a schematic flowchart for performing a certificate management method through an extended ACME protocol according to an embodiment of this application;
FIG. 12 is a diagram for comparing public keys when an identifier type is pk according to an embodiment of this application;
FIG. 13 is a diagram for comparing public keys and identity information when an identifier type is csr or selfsign-cert according to an embodiment of this application;
FIG. 14 is a diagram of a structure of a certificate issuance device according to an embodiment of this application; and
FIG. 15 is a diagram of a structure of a certificate application device according to an embodiment of this application.

### DESCRIPTION OF EMBODIMENTS

To make the objectives, technical solutions, and advantages of this application clearer and more comprehensible, the following describes embodiments of this application with reference to the accompanying drawings. It is clear that the described embodiments are only some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the descriptions termed in such a manner are interchangeable in proper cases so that embodiments can be implemented in another order than the order illustrated or described in this application. In addition, the terms "include", "have", and any other variants are intended to cover a non-exclusive inclusion. For example, a process, method, system, product, or device that includes a list of steps or modules is not necessarily limited to those expressly listed steps or modules, but may include other steps or modules that are not expressly listed or that are inherent to the process, method, system, product, or device. Naming or numbering of steps in this application does not mean that steps in a method procedure need to be performed based on a time/logical sequence indicated by the naming or numbering. An execution sequence of procedure steps that have been named or numbered may be changed based on a technical objective to be implemented, provided that same or similar technical effect can be achieved. Unit division in this application is logical division and may be other division during actual implementation. For example, a plurality of units may be combined or integrated into another system, or some features may be ignored or not performed. In addition, displayed or discussed mutual couplings or direct couplings or communication connections may be implemented through some interfaces. Indirect couplings or communication connections between the units may be implemented in electronic or other similar forms. This is not limited in this application. In addition, units or subunits described as separate components may or may not be physically separated, may or may not be physical units, or may be distributed in a plurality of circuit units. Some or all of the units may be selected based on actual requirements to achieve the objectives of the solutions of this application.

For ease of understanding, the following first describes technical terms in embodiments of this application.

### (1) Digital certificate

A digital certificate, usually referred to as a certificate, is a digital credential that represents identity information of each communication party in Internet communication, and in essence, is an electronic document that uniquely identifies persons and resources. A digital certificate enables secure and confidential communication between two entities.

Generally, a digital certificate includes a public key, a name, and a digital signature of a CA. The name may indicate an identity of a user or a device that applies for the digital certificate.

### (2) Certificate authority (Certificate Authority, CA)

A CA is an organization that issues digital certificates. Specifically, the CA is an authority responsible for issuing and managing digital certificates. As a trusted third party in e-commerce transactions, the CA is responsible for verifying legitimacy of public keys in a public key system.

### (3) Public key infrastructure (Public Key Infrastructure, PKI)

A public key infrastructure is a collection of hardware, software, personnel, policies, and procedures. The public key infrastructure is used to implement functions such as generating, managing, storing, distributing, and revoking keys and certificates based on a public key cryptosystem.

A PKI system is a combination of computer software and hardware, authorities, and application systems. The PKI system provides basic security services for e-commerce, e-government, office automation, and the like, so that users who do not know each other or are far away from each other can communicate with each other securely through a trust chain.

### (4) Order (Order)

An order is a certificate application object defined in the automatic certificate management environment (Automatic Certificate Management Environment) protocol. According to the ACME protocol, an order represents a certificate application request from a user for a digital certificate and is used to track processing progress of the certificate application request until the digital certificate is issued. In the ACME automatic certificate management environment, an ACME client sends a certificate application request to an ACME server. After confirming the certificate application request from the ACME client, the ACME server creates an order for the certificate application request, to track the certificate application process. The order contains information about the digital certificate to be applied for, information about an authorization that needs to be completed to apply for the digital certificate, and the like.

### (5) Identifier (Identifier)

An identifier is a field defined in the ACME protocol to identify an identity represented by a certificate to be applied for. Consistency between an identifier in an order and an identifier in a common name (Common Name, CN) field in a finally issued digital certificate indicates an identity represented by the certificate requested to be issued. An identifier is an object with two fields: type and value. Identifiers usually need to be unique and are used to distinguish between different identities. Identifier types may be a plurality of types such as a domain name, an email address, and an IP address.

### (6) Authorization (Authorization) object

An authorization is an authorization object defined in the ACME protocol for an identity or proof. An ACME authorization object indicates an authorization of an account by a server, to represent an identifier (for example, a domain name).

### (7) Challenge (Challenge)

In the ACME protocol, a challenge indicates that the ACME server verifies, in a specific manner, whether the ACME client has control over an identifier. Each challenge belongs to a specific authorization, and one authorization may have a plurality of challenge objects.

### (8) Token (token)

In some cases, a type of ACME challenge object includes a token to identify uniqueness of a challenge. A token is randomly generated when a challenge is created. Different challenges have different token values. Some types of challenge objects do not use tokens to distinguish uniqueness. Therefore, some types of challenge objects may not have tokens.

### (9) Key authorization (Key Authorization)

A key authorization is a field used to verify challenge consistency between the ACME client and the ACME server. The key authorization is formed by combining a random token in a challenge object and a private key of a certificate applicant in a specific manner, and may indicate the corresponding challenge object and an identity of the certificate applicant.

### (10) Authenticated key exchange (Authenticated Key Exchange, AKE) protocol

The authenticated key exchange protocol is an important research direction in the field of cryptography. It means that two or more parties generate a secret value in a specific manner to implement secure communication with each other when there is an active attacker.

### (11) Password-authenticated key exchange (Password-authenticated Key Exchange, PAKE) protocol

Password-authenticated key exchange is an interaction method for two or more parties to establish a cryptographic key based on their knowledge of a password. Two or more parties exchange messages to establish an encryption key based on their knowledge of a shared password. In this way, an unauthorized party (who controls a communication channel but does not have the password) cannot participate in the method, and brute force guessing of the password is restricted as much as possible, so that a user and a server can efficiently agree upon a security key based on a shared low-entropy password.

### (12) Asymmetric password-authenticated key exchange (Asymmetric Password-Authenticated Key Exchange, aPAKE) protocol

Passwords are usually simple and easy to remember, while keys are usually complex and difficult to remember. The password-authenticated key exchange (Password-Authenticated Key Exchange, PAKE) protocol allows two communication parties to convert local low-entropy passwords into high-entropy keys for communication. In this way, eavesdroppers or man-in-the-middle attackers cannot obtain sufficient information to guess passwords. This means that strong security can be achieved by using weak passwords. However, in conventional password authentication, passwords need to be stored on the server or plaintext passwords are transmitted to the server during authentication.

Therefore, the aPAKE protocol proposes that a mapping relationship between a password and a key should be established, so that a communication party can complete authentication in advance without knowing a plaintext password. However, if the mapping relationship between the password and the key is deterministic, or random salt in plaintext alone causes uncertainty, an attacker can compute the password based on the key through pre-computation. In this case, the aPAKE protocol cannot provide stronger security than the PAKE protocol.

### (13) Opaque protocol

The Opaque protocol is an asymmetric password-authenticated key exchange protocol that can prevent a pre-computation attack. Through the Opaque protocol, a user key can be stored on the server and identity authentication can be completed without exposing a password externally. In this way, neither the server nor a communication operator can obtain or crack the password. By combining an oblivious pseudorandom function (oblivious pseudorandom function, OPRF) with the aPAKE protocol, an approach for resisting a pre-computation attack is provided.

### (14) Public key and private key

A public key, short for public key, is a non-secret half of a key pair used with a private key algorithm. The public key is generally used to encrypt a session key, verify a digital signature, or encrypt data that can be decrypted by using a corresponding private key.

A private key, short for private key, is a secret half of a key pair used with a public key algorithm.

A public key and a private key are a key pair (that is, a public key and a private key) obtained by using an algorithm. One of the keys is public and is referred to as the public key, and the other key is reserved and is referred to as the private key. The key pair obtained through the algorithm can ensure worldwide uniqueness. When this key pair is used, if one of the keys is used to encrypt a segment of data, the other key needs to be used for decryption. If the public key is used for data encryption, the private key needs to be used for decryption; or if the private key is used for encryption, the public key needs to be used for decryption. Otherwise, the decryption fails.

### (15) Zero-knowledge proof

Zero-knowledge proof means that a prover can convince a verifier that a statement is correct without providing any useful information to the verifier. The zero-knowledge proof is essentially a protocol involving two or more parties, that is, a series of steps that the two or more parties need to take to complete a task. The prover proves to the verifier and convinces the verifier that the prover knows or owns a message, but a proving process cannot leak any information about the proved message to the verifier.

In cryptography, zero-knowledge proof can be used by a prover to prove to a verifier and convince the verifier that the prover has a private key, and a proving process does not leak any information about the private key to the verifier.

### (16) Certificate signing request (Certificate Signing Request, CSR)

A CSR is essentially an encoded text block sent by a certificate applicant to the CA when applying for a digital certificate. A CSR generally includes two types of information: related identity information of a certificate applicant and a public key that is required to be included in a digital certificate. The related identity information of the certificate applicant includes, for example, the following information:
common name (Common Name, CN): which may be specifically a domain name of a server, for example, www.xxxx.com;
organization name: a legal name of an organization, for example, xxxx Co., Ltd;
organization unit: a department of the organization, such as an IT department;
city/location: a city where the organization is located;
state/county/region: a specific region where the organization is located, for example, Beijing/Shandong;
country: a country where the organization is located, for example, China; and
email address: an email address used to contact the organization.

### (17) Redirect (Redirect)

Redirection is to redirect network requests to other locations by using various methods.

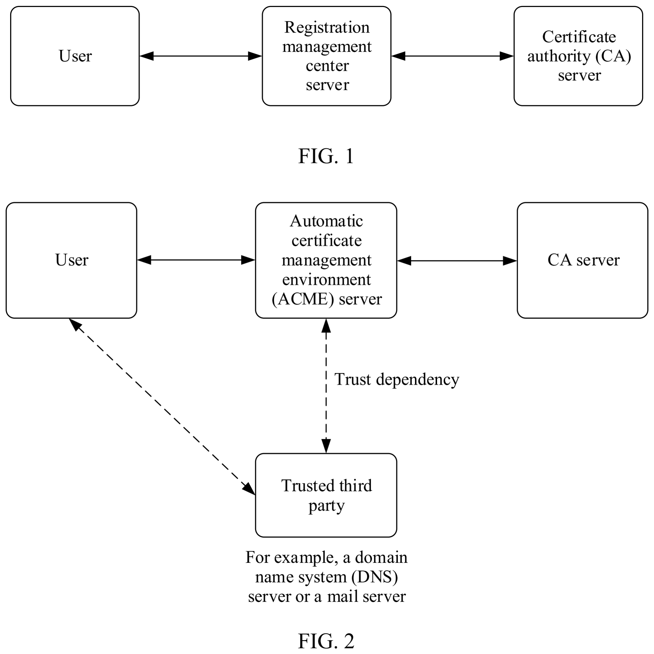

In cryptography, a PKI binds a personal identity of a user to a public key through a CA. FIG. 1 is a diagram of a PKI architecture according to an embodiment of this application. As shown in FIG. 1, the PKI architecture includes a user, a registration management center (Registration Authority, RA) server, and a CA server. The user is an applicant for a digital certificate and needs to apply for the digital certificate to prove an identity of the user.

The RA server is a reviewer of the certificate application and is responsible for reviewing the request for the digital certificate application. In the conventional PKI architecture, work of the RA server is usually manually completed. To be specific, the applicant is allowed to apply to the CA for the digital certificate only after consistency between the identity of the applicant for the digital certificate and an identity of the certificate to be applied for is manually verified.

The CA server is an issuer of digital certificates and is responsible for issuing and managing digital certificates. A digital signature of the CA prevents an attacker from forging and tampering with a digital certificate.

Generally, a digital certificate application process is specifically as follows: A user first submits a certificate application request to an RA server; the RA server authenticates a user identity, and after the user identity is authenticated, sends a certificate signing request to a CA server, to request the CA server to issue a digital certificate to the user; and after receiving the certificate signing request, the CA server issues a digital certificate to an application identity of the user, so that the user can obtain the digital certificate with a digital signature of the CA.

Currently, to improve certificate issuance efficiency, the ACME protocol is proposed in a related technology. Based on the ACME protocol, digital certificates can be automatically issued to users.

FIG. 2 is a diagram of an ACME-based PKI architecture according to an embodiment of this application. As shown in FIG. 2, the ACME-based PKI architecture includes a user, an ACME server, a CA server, and a trusted third party. The ACME server implements a function of the RA server shown in FIG. 1. Specifically, the ACME server authenticates a user identity through a third party based on trust in the third party (for example, a domain name system (Domain Name System, DNS) or a mail server), to implement user identity authentication.

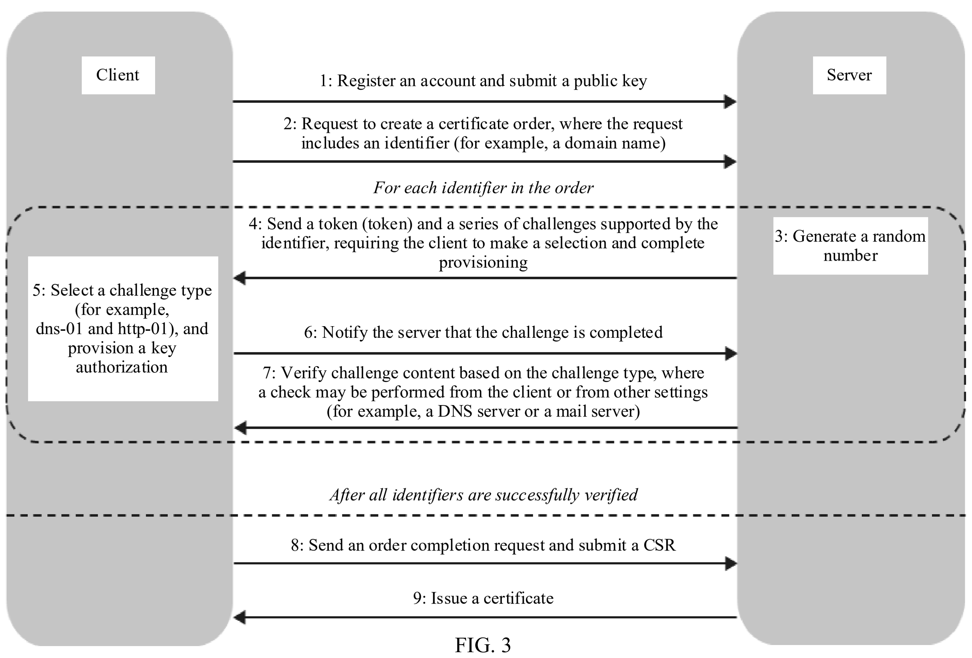

FIG. 3 is a diagram of an interaction procedure based on an ACME protocol according to an embodiment of this application. As shown in FIG. 3, during implementation of the ACME protocol, an ACME client associated with a certificate applicant and an ACME server associated with a CA server are required. The ACME client and the ACME server implement automatic issuance of a digital certificate according to the basic procedure in FIG. 3. As shown in FIG. 3, a process of implementing automatic issuance of a digital certificate based on the ACME protocol includes the following step 1 to step 9.

Step 1: An ACME client registers an account with an ACME server and submits a public key bound to the registered account. When applying for a certificate, a certificate applicant usually needs to use an account to submit a certificate application request, to ensure authenticity and integrity of the certificate application request.

Step 2: The ACME client sends a certificate application request to the ACME server, requesting the ACME server to create a certificate order. In addition, the certificate application request sent by the ACME client includes an identifier indicating a user identity, and the identifier may be, for example, a domain name or an email address controlled by a user.

Step 3: To verify that the certificate applicant has control over the identifier of the certificate applicant in the certificate application request, for example, control over the domain name, the ACME server generates a random number, to require the certificate applicant to place the random number on a domain name server.

Step 4: The ACME server sends a token (token), the generated random number, and a series of challenges supported by the identifier to the ACME client, requiring the ACME client to make a selection and complete provisioning. Provisioning means that the ACME client is required to place a specified resource at a specified position, for example, place, on a specified domain name server, the random number generated by the ACME server.

Step 5: The ACME client selects a challenge type and completes the challenge based on the selected challenge type. For example, the ACME client places, on the specified domain name server, the random number generated by the ACME server.

Step 6: The ACME client notifies the ACME server that the ACME client has completed the challenge.

Step 7: The ACME server verifies challenge content based on the challenge type selected by the ACME client.

For each identifier in the certificate application request, the foregoing step 4 to step 7 need to be performed, to complete verification on control of the certificate applicant over each identifier.

Step 8: The ACME client sends an order completion request to the ACME server, and submits a CSR, where the CSR includes a public key that the certificate applicant requests to be presented in a digital certificate.

Step 9: The ACME server issues the digital certificate to the ACME client based on the identifier in the certificate application request and the public key in the CSR.

In general, a basic idea of the ACME protocol is that a certificate applicant proves ownership of an identity for a certificate to be applied for, and then a CA issues a corresponding digital certificate for the control. For example, when an identity of a certificate applicant that applies to the CA for a digital certificate is a domain name, because only a domain name controller can modify content on the domain name server, the ACME server returns a random number to the certificate applicant, to request the certificate applicant to place the random number at a specific position on the domain name server. If content on the domain name server is the random number placed at the specific position on the domain name server as required by the ACME server, it indicates that the certificate applicant is indeed the domain name controller. In this way, the identity of the certificate applicant is authenticated.

Through research, the applicant finds that the current ACME protocol proposes a plurality of modes for verifying control of the user over the application identity. However, the verification modes proposed in the ACME protocol are merely to verify the control of the user over the application identity, without further verifying consistency between the public key submitted by the user and the application identity. In other words, the ACME protocol authenticates only the user identity indicated in the certificate application request submitted by the user, but does not verify whether the public key in the CSR submitted by the user after successful identity authentication belongs to the user indeed. This brings a security risk, and a public key replacement attack is likely to occur. For ease of understanding, the following describes this public key replacement attack with reference to a plurality of scenarios.

Scenario 1: Internal personnel of a company collaborate with external personnel to carry out attack activities.

In the scenario 1, there are three roles: a company A, an internal employee Alice of the company A, and an external employee Bob.

The company A issues a digital certificate to each employee. The digital certificate is used to prove a real identity of the employee. The company A requires employees to be present in some scenarios, such as holding meetings/trainings, organizing employee examinations, and daily attendance. In these scenarios, digital certificates are used to authenticate identities of the employees.

However, according to the current ACME protocol procedure, after completing an ACME challenge, the internal employee Alice of the company A uses a public key of the external employee Bob but still uses an identity of Alice when submitting a CSR. In this way, a digital certificate finally issued by the CA to the internal employee Alice includes identity information of the internal employee Alice and the public key of the external employee Bob. In this case, because the external employee Bob has a private key corresponding to an identity certificate of Alice, the external employee Bob can carry out activities in the company A in place of the employee Alice.

Scenario 2: A malicious administrator carries out attack activities.

In the scenario 2, the company A requires an administrator Carl to apply for a digital certificate for a web server. In addition, according to security specifications of the company A, a public key and a private key for applying for a digital certificate are provided by key protection hardware. If the administrator Carl applies for a digital certificate for the web server according to the security specifications of the company A, the administrator Carl cannot obtain the private key of the digital certificate from the key protection hardware because the public key of the digital certificate is provided by the key protection hardware.

However, according to the current ACME protocol procedure, in a process of applying for a digital certificate for the company A, the malicious administrator Carl replaces a public key in a CSR request with a public key of the administrator when finally submitting the CSR. In this case, the malicious administrator Carl has a private key corresponding to the digital certificate of the web server in the company A, and can use the digital certificate to carry out attack activities.

Scenario 3: A malicious agent carries out attack activities.

In an actual service scenario, a plurality of types of terminal devices usually need to apply for certificates. However, considering restrictions on security channels and heavy workload caused by development of a corresponding ACME client for each type of terminal device, an ACME client agent is usually used to implement an ACME-based digital certificate application procedure for various types of terminal devices.

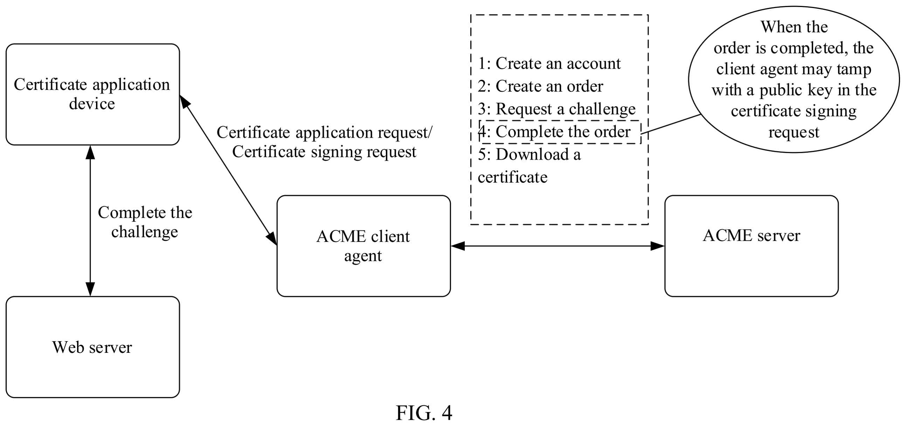

FIG. 4 is a diagram in which an ACME client agent tampers with a public key according to an embodiment of this application. In an ACME agent scenario, the ACME client agent performs an ACME client procedure in place of a terminal device, and a challenge is completed by an actual applicant for a digital certificate. In this scenario, the ACME client agent can also replace a public key of the digital certificate applicant when finally submitting a CSR, to obtain control over an identity of the digital certificate applicant and carry out attack activities.

In view of this, an embodiment of this application provides a certificate management method. In a digital certificate application process, a trusted identity provider (Identity Provider, IDP) is introduced to authenticate a certificate application identity and obtain a public key corresponding to the certificate application identity, so as to compare whether the public key corresponding to the certificate application identity is the same as a public key in a certificate signing request, thereby ensuring consistency between the certificate application identity and the public key, preventing the public key from being tampered with in a phase of submitting the certificate signing request, avoiding a case in which identity information in an issued digital certificate does not match the public key, and improving security in a digital certificate issuance process.

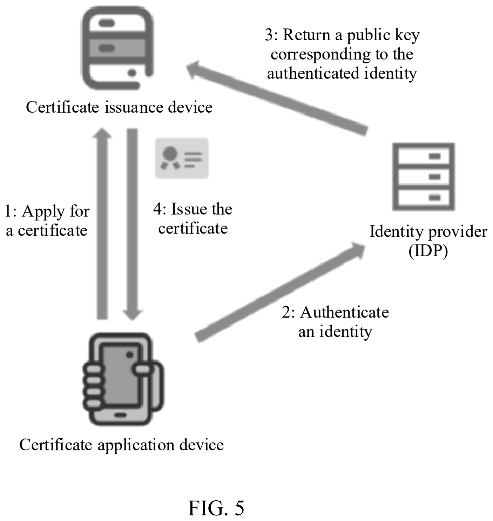

FIG. 5 is a diagram of an architecture of an application scenario according to an embodiment of this application. As shown in FIG. 5, an application scenario to which a certificate management method provided in an embodiment of this application is applied includes a certificate application device, a certificate issuance device, and an IDP. In a digital certificate application process, the certificate application device first sends a request to the certificate issuance device, to request the certificate issuance device to issue a digital certificate. Then the certificate application device performs identity authentication by using the IDP. Because a mapping relationship between identity information and a public key is prestored in the IDP, after successful identity authentication of the certificate application device, the IDP can determine a public key corresponding to an authenticated identity of the certificate application device. In this way, after identity authentication is performed, the IDP returns the public key corresponding to the authenticated identity to the certificate issuance device, so that the certificate issuance device determines whether a public key indicated by the certificate application device in the certificate application process is consistent with the public key returned by the IDP. Finally, when the certificate issuance device determines that identity authentication and public key verification of the certificate application device succeed, the certificate issuance device issues the digital certificate to the certificate application device.

In this embodiment, the certificate application device may be, for example, an electronic device such as a smartphone, a personal computer, a notebook computer, a tablet computer, or a server. The certificate issuance device may be, for example, a physical device such as a server or a virtual device such as a virtual machine running on a server. The IDP may be, for example, a physical device such as a server or a virtual device such as a virtual machine running on a server.

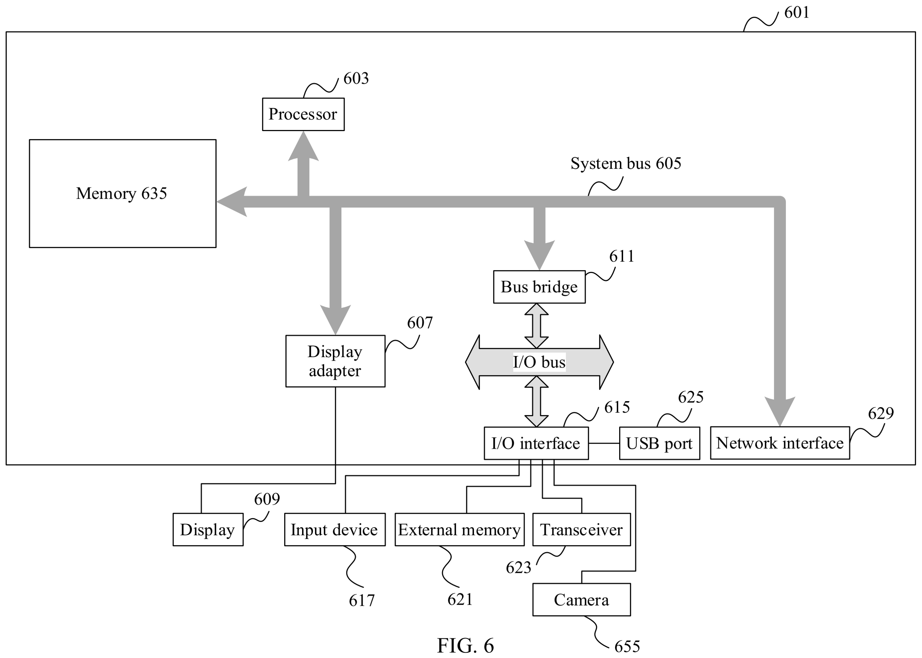

FIG. 6 is a diagram of a structure of an electronic device 601 according to an embodiment of this application. The electronic device 601 shown in FIG. 6 may be the foregoing certificate issuance device or certificate application device.

As shown in FIG. 6, the electronic device 601 includes a processor 603, and the processor 603 is coupled to a system bus 605. The processor 603 may be one or more processors, and each processor may include one or more processor cores. A display adapter (video adapter) 607 may drive a display 609, and the display 609 is coupled to the system bus 605. The system bus 605 is coupled to an input/output (I/O) bus through a bus bridge 611. An I/O interface 615 is coupled to the I/O bus. The I/O interface 615 communicates with a plurality of I/O devices, for example, an input device 617 (for example, a touchscreen), an external memory 621 (for example, a hard disk, a floppy disk, an optical disc, or a USB flash drive), a multimedia interface, a transceiver 623 (which may send and/or receive a radio communication signal), a camera 655 (which may capture still and dynamic digital video images), and an external USB port 625. Optionally, an interface connected to the I/O interface 615 may be a USB interface.

The processor 603 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus, for example, an ASIC.

The electronic device 601 may communicate with another electronic device through a network interface 629, to implement data transmission in a projection process.

The processor 603 may communicate with a memory 635 through the system bus 605, and fetch instructions and data in an application program from the memory 635 to execute the program.

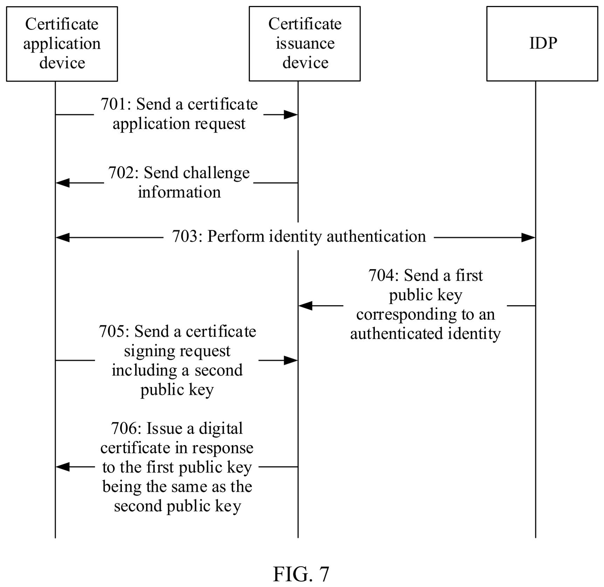

FIG. 7 is a schematic flowchart of a certificate management method according to an embodiment of this application. As shown in FIG. 7, the certificate management method includes the following steps 701 to 706.

Step 701: A certificate application device sends a certificate application request to a certificate issuance device, where the certificate application request is used to apply for a digital certificate.

When the certificate application device needs to apply for the digital certificate, the certificate application device sends the certificate application request to the certificate issuance device, to request the certificate issuance device to issue the digital certificate to the certificate application device.

Optionally, an ACME client may be deployed on the certificate application device, and an ACME server may be deployed on the certificate issuance device. The certificate application device sends the certificate application request to the ACME server on the certificate issuance device by using the ACME client.

Step 702: The certificate issuance device sends challenge information to the certificate application device, where the challenge information indicates the certificate application device to perform identity authentication by using an IDP.

After receiving the certificate application request, the certificate issuance device needs to first authenticate an identity of the certificate application device, and can issue the digital certificate to the certificate application device only after the identity of the certificate application device is authenticated. Therefore, in this embodiment, the certificate issuance device sends the challenge information to the certificate application device, to indicate the certificate application device to perform identity authentication by using the IDP.

The IDP is a device trusted by the certificate issuance device, and a mapping relationship between identity information and a public key is prestored in the IDP. For example, by using the certificate application device, a user may pre-register with the IDP in a manner trusted by the IDP, and submit a public key corresponding to the registered identity, so that the IDP can store a mapping relationship between identity information and the public key.

In some embodiments, the IDP may alternatively store a private key corresponding to the identity information or a ciphertext of a private key, that is, the IDP stores a public-private key pair corresponding to the identity information.

Optionally, the challenge information includes information about a plurality of IDPs, and the challenge information indicates the certificate application device to perform identity authentication by using any IDP. In other words, there are a plurality of IDPs trusted by the certificate issuance device, and the certificate issuance device may include information about the plurality of trusted IDPs in the challenge information, to indicate the certificate application device to perform identity authentication by using any IDP. As long as the certificate application device completes identity authentication on any IDP trusted by the certificate issuance device, it indicates that the certificate application device has completed trusted identity authentication. The information about the plurality of IDPs is indicated in the challenge information, so that the certificate application device can select any IDP to complete identity authentication. This ensures diversity of selections by the certificate application device, and ensures that the certificate application device can effectively perform an identity authentication process.

In addition, the identity information stored in the IDP may be a user identity or a device identity. This is not specifically limited in this embodiment.

Step 703: The certificate application device performs identity authentication by using the IDP, so that the IDP determines a first public key in a mapping relationship with an identity corresponding to the certificate application request.

In this embodiment, after receiving the challenge information, the certificate application device selects the IDP based on the indication in the challenge information to perform identity authentication. Specifically, the certificate application device may log in to the IDP based on the identity used to apply for issuing the digital certificate (that is, the identity corresponding to the certificate application request), and the IDP authenticates the identity of the certificate application device. Because the mapping relationship between the identity information and the public key is prestored in the IDP, after the identity of the certificate application device is authenticated by the IDP, the IDP can determine the corresponding first public key based on the authenticated identity information of the certificate application device.

Optionally, a mode in which the IDP authenticates the identity of the certificate application device may be specifically verifying whether the certificate application device holds a private key corresponding to the indicated identity. In other words, because the certificate application device logs in to the IDP by using the identity corresponding to the certificate application request, if the identity of the certificate application device is indeed the identity corresponding to the certificate application request, the certificate application device holds the private key corresponding to the identity. Therefore, after the certificate application device logs in to the IDP by using the identity corresponding to the certificate application request, the IDP verifies whether the certificate application device has the private key corresponding to the login identity.

Simply, when the IDP stores the mapping relationship between the identity corresponding to the certificate application request and the first public key, the IDP is configured to verify whether the identity corresponding to the certificate application request has a private key corresponding to the first public key, to implement identity authentication on the certificate application device. Consistency between the identity corresponding to the certificate application device and the public key can be verified by checking whether the certificate application device has control over the private key corresponding to the public key. In this way, it is ensured that the digital certificate obtained in the subsequent application matches the application identity and the public key.

For example, the certificate application device may first log in to the IDP based on first identity information, for example, log in to the IDP based on an account and a password corresponding to the first identity information or a password corresponding to the first identity information. After successfully logging in to the IDP, the certificate application device obtains an identity authentication request sent by the IDP, where the identity authentication request is used to request to verify a private key corresponding to the first identity information. Then, based on the identity authentication request sent by the IDP, the certificate application device cooperates with the IDP to complete identity authentication. A process in which the certificate application device cooperates with the IDP to complete identity authentication is determined based on an identity authentication mode supported by the IDP.

Optionally, the IDP supports any one or more of the following identity authentication modes: zero-knowledge proof, public key signature, and identity authentication based on an asymmetric password-authenticated key exchange protocol. The asymmetric password-authenticated key exchange protocol may be, for example, the aPAKE or Opaque protocol described above.

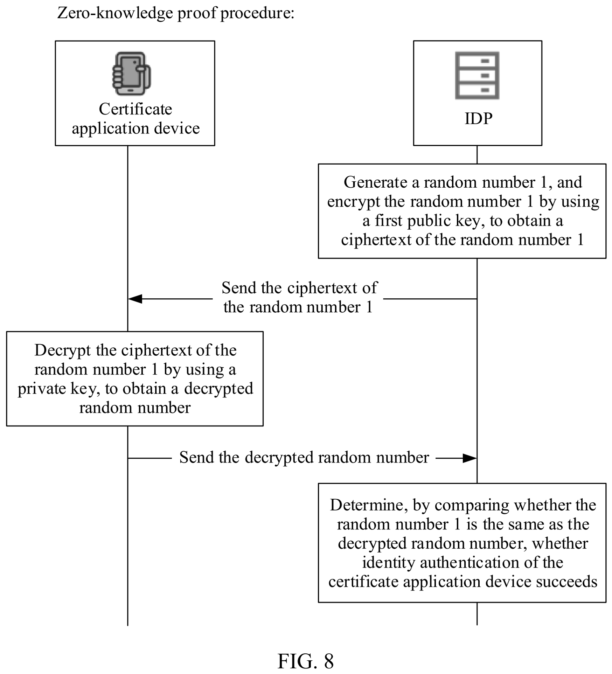

When the identity authentication mode is zero-knowledge proof, the certificate application device needs to prove, to the IDP, that the certificate application device has the private key corresponding to the first public key, and does not leak information about the private key to the IDP. Specifically, refer to FIG. 8. FIG. 8 is a schematic flowchart for performing identity authentication on a certificate application device based on zero-knowledge proof according to an embodiment of this application. As shown in FIG. 8, the IDP may first generate a random number 1, and encrypt the random number 1 by using the first public key, to obtain a ciphertext of the random number 1. Then the IDP sends the ciphertext of the random number 1 to the certificate application device, and requires the certificate application device to decrypt the ciphertext of the random number 1 by using the private key corresponding to the first public key. The certificate application device decrypts the ciphertext of the random number 1 by using the private key, to obtain a decrypted random number, and sends the decrypted random number to the IDP. In this way, the IDP may determine, by comparing whether the random number 1 is the same as the decrypted random number, whether identity authentication of the certificate application device can succeed.

If the certificate application device can return a correct random number to the IDP, it indicates that the certificate application device can correctly decrypt the ciphertext of the random number, that is, the certificate application device has the private key of the first public key, and therefore, identity authentication of the certificate application device can succeed. If the certificate application device cannot return a correct random number to the IDP, it indicates that the certificate application device cannot correctly decrypt the ciphertext of the random number, that is, the certificate application device does not have the private key of the first public key, and therefore, identity authentication of the certificate application device cannot succeed.

When the identity authentication mode is public key signature, the certificate application device generates a segment of random information, performs hash computation on the segment of random information, and then encrypts, by using the private key, a hash value obtained through computation, to obtain a digital signature. Then the certificate application device sends the digital signature obtained based on the private key, along with the random information, to the certificate issuance device. If the certificate issuance device can successfully decrypt the digital signature by using the first public key and obtain the same random information, it indicates that the certificate application device has the private key of the first public key, and therefore, identity authentication of the certificate application device can succeed. If the certificate issuance device cannot successfully decrypt the digital signature by using the first public key and obtain the same random information, it indicates that the certificate application device does not have the private key of the first public key, and therefore, identity authentication of the certificate application device cannot succeed.

Step 704: The IDP sends the first public key to the certificate issuance device, where a mapping relationship exists between the first public key and the identity corresponding to the certificate application request.

After the IDP authenticates the identity of the certificate application device, the IDP sends, to the certificate issuance device, the first public key in the mapping relationship with the identity corresponding to the certificate application request. In this way, the certificate issuance device can determine the first public key corresponding to the identity authenticated by the IDP in identity authentication. In other words, the certificate issuance device may trust the first public key as a public key corresponding to the authenticated identity.

Step 705: The certificate application device sends a certificate signing request to the certificate issuance device, where the certificate signing request includes a second public key, and the certificate signing request is used to request to issue a digital certificate including the second public key.

After the certificate application device completes identity authentication by using the IDP, it indicates that the certificate application device has completed the challenge delivered by the certificate issuance device. Therefore, the certificate application device may send the certificate signing request to the certificate issuance device, to trigger the certificate issuance device to issue the digital certificate to the certificate application device on which identity authentication is successfully performed.

In addition, the certificate signing request includes the second public key, and the second public key is a public key that is requested by the certificate signing request and that needs to be included in the digital certificate.

Step 706: The certificate issuance device issues, in response to the first public key being the same as the second public key, the digital certificate including the second public key to the certificate application device.

After receiving the certificate signing request, the certificate issuance device compares whether the second public key in the certificate signing request is the same as the first public key returned by the IDP, to determine whether the identity of the certificate application device that requests to issue the digital certificate matches the public key. If the first public key is the same as the second public key, it indicates that the identity of the certificate application device that requests to issue the digital certificate matches the public key. Therefore, the certificate issuance device may issue the digital certificate including the second public key to the certificate application device.

Optionally, in some embodiments, the certificate application request includes a third public key, and the third public key is a public key that the certificate application device requests to be included in a digital certificate. In other words, the certificate application request sent by the certificate application device at the beginning needs to specify the public key that needs to be included in the digital certificate applied for.

In this way, after the certificate issuance device receives the first public key sent by the IDP, the certificate issuance device may compare the first public key with the third public key, to determine whether the first public key corresponding to the authenticated identity of the certificate application device is the same as the third public key applied for by the certificate application device. If the first public key is the same as the third public key, it indicates that the identity of the certificate application device authenticated by the IDP is the same as the identity of the certificate application device that applies for the digital certificate. Therefore, the certificate issuance device determines that the certificate application device has completed the challenge.

The certificate issuance device sends a response message to the certificate application device in response to the third public key being the same as the first public key, where the response message indicates that identity authentication of the certificate application device succeeds, that is, the certificate application device has completed the challenge specified by the certificate issuance device. In this way, after receiving the response message, the certificate application device triggers sending of the certificate signing request to the certificate issuance device.

In addition, after receiving the certificate signing request, the certificate issuance device compares whether the third public key in the certificate application request is the same as the second public key in the certificate signing request, to determine whether the first public key is the same as the second public key. In other words, that the first public key is the same as the second public key is determined by comparing the third public key with the second public key. Because the third public key is the same as the first public key, if the third public key in the certificate application request is the same as the second public key in the certificate signing request, it indicates that the first public key is the same as the second public key.

In this way, the certificate issuance device no longer needs to store the first public key returned by the IDP, but sequentially compares the first public key with the third public key in the certificate application request and the third public key with the second public key in the certificate signing request, so that consistency of the certificate application identity and the public key can be verified. This improves security in a certificate issuance process, minimizes modifications to the conventional technology, and improves compatibility of the solution.

Optionally, in some other embodiments, the certificate application request further includes the first identity information, and the certificate signing request further includes second identity information. In other words, the certificate application request includes both the third public key and the first identity information, and the certificate signing request includes both the second public key and the second identity information.

In addition, when obtaining the first public key sent by the IDP, the certificate issuance device further obtains third identity information sent by the IDP, and a mapping relationship exists between the third identity information and the first public key. In other words, the identity information of the certificate application device authenticated by the IDP is the third identity information, and the third identity information corresponds to the first public key on the IDP.

In this way, when both the certificate application request and the certificate signing request include the identity information and the public key, and the IDP returns both the identity information and the public key, the certificate issuance device first compares the first identity information and the third public key in the certificate application request with the third identity information and the first public key that are returned by the IDP. When the first identity information is the same as the third identity information, and the third public key is the same as the first public key, the certificate issuance device may determine that the identity of the certificate application device matches the requested public key, and therefore, determines that the certificate application device completes the challenge. Then the certificate issuance device compares the first identity information and the third public key in the certificate application request with the second identity information and the second public key in the certificate signing request. When the first identity information is the same as the second identity information, and the third public key is the same as the second public key, the certificate issuance device may determine that the identity information and the public key that are submitted by the certificate application device twice are the same, and both the identity information and the public key are successfully verified. Therefore, the certificate issuance device may issue the digital certificate to the certificate application device based on the second public key and the second identity information in the certificate signing request.

In other words, the certificate issuance device may issue, in response to the first public key being the same as the second public key and the first identity information being the same as both the second identity information and the third identity information, the digital certificate including the second public key and the second identity information to the certificate application device.

In general, when the certificate application request and the certificate signing request include only the public key but do not include the identity information, and the IDP returns only the public key, the certificate issuance device may compare only the public key but does not compare the identity information; or when the certificate application request and the certificate signing request include both the public key and the identity information, and the IDP returns both the public key and the identity information, the certificate issuance device may compare both the public key and the identity information.

In this solution, when both the certificate application request and the certificate signing request include the public key and the identity information, the certificate issuance device compares the public keys and the identity information that are obtained in various ways before issuing the digital certificate, to ensure that the public key and the identity information that are indicated by the certificate application device in the digital certificate application process match the public key and the identity information of the certificate application device that are actually successfully verified, thereby ensuring security of the digital certificate issued by the certificate issuance device.

Optionally, in the certificate application request, the third public key and the first identity information are carried in a same identifier. The identifier in which the third public key and the first identity information are located indicates content of the certificate application device that needs to be verified in a challenge process. In other words, in the challenge process performed by the certificate application device, the certificate issuance device actually verifies content carried in the identifier in the certificate application request.

It may be understood that, in the related technology, an identifier is also defined in a certificate application request to indicate content that needs to be verified in a challenge process, for example, the foregoing content such as a domain name or an email address. Therefore, in this solution, a new type of identifier is defined in the certificate application request, so that the identifier can indicate the public key and the identity information. In this way, on a basis of implementing verification on the public key and the identity information, modifications to the conventional technology can be minimized, and compatibility of the solution can be improved.

In addition, when the certificate application request includes only the public key but does not include the identity information, the public key may also be carried in the certificate application request by using a specific type of identifier (that is, a type of identifier that carries only the public key). In this case, the certificate issuance device only needs to verify the public keys obtained in various ways in the certificate application process.

The foregoing describes a process in which the certificate issuance device compares the information submitted by the certificate application device with the information returned by the IDP, to ensure security in the certificate issuance process. In actual application, one certificate issuance device may correspond to a plurality of certificate application devices, that is, the certificate issuance device may obtain certificate application requests from different certificate application devices, and may indicate the plurality of different certificate application devices to implement identity authentication by using a same IDP. In this case, the certificate issuance device usually needs to associate the public key returned by the IDP with the corresponding certificate application device, to compare the public key returned by the IDP with the public key submitted by the certificate application device in the certificate application request.

In this embodiment, a plurality of implementations are provided to implement interactions between the certificate issuance device, the certificate application device, and the IDP, so that the certificate issuance device associates the public key returned by the IDP with the corresponding certificate application device.

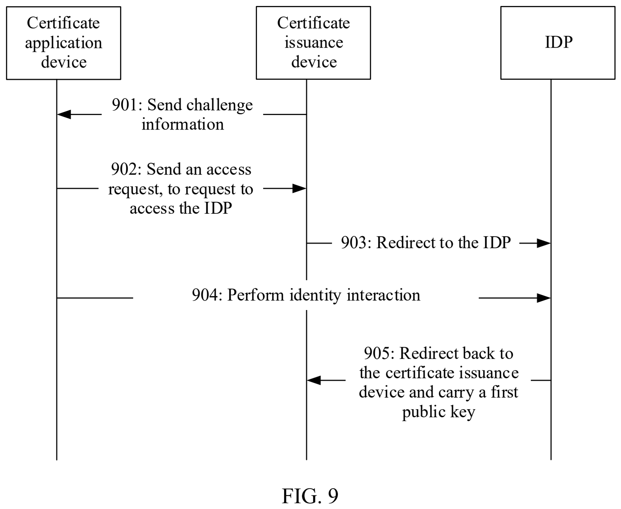

For example, FIG. 9 is a schematic flowchart in which a certificate application device performs identity authentication based on an indication of a certificate issuance device by using an IDP according to an embodiment of this application. The procedure shown in FIG. 9 includes the following steps 901 to 905.

Step 901: The certificate issuance device sends challenge information to the certificate application device, where the challenge information indicates the certificate application device to perform identity authentication by using the IDP.

Step 901 is similar to step 702. For details, refer to step 702. Details are not described herein again.

Step 902: The certificate application device sends an access request to the certificate issuance device, where the access request is used to request to access the IDP, and the access request includes identity information corresponding to the certificate application request.

Because the certificate issuance device indicates, in the challenge information, that the certificate application device needs to perform identity authentication by using the IDP, the certificate application device may send the access request to the certificate issuance device, and include the identity information (for example, account information or device information of the certificate application device) corresponding to the certificate application request in the access request, to request to access the IDP.

When the challenge information includes information about a plurality of IDPs, the certificate application device may select one of the plurality of IDPs, and include information about the selected IDP in the access request, so that the certificate issuance device determines that the certificate application device selects the IDP for performing identity authentication.

Step 903: The certificate issuance device redirects the certificate application device to the IDP.

Because the access request sent by the certificate application device is a request to access the IDP, the certificate issuance device redirects the certificate application device to the IDP in a process of processing the access request, so that the certificate application device accesses the IDP.

Step 904: The certificate application device interacts with the IDP to perform identity authentication.

After the certificate application device is redirected to the IDP, the certificate application device may interact with the IDP based on a protocol supported by the IDP, to perform identity authentication of the certificate application device. For a mode of identity authentication performed by the certificate application device, refer to the foregoing description. Details are not described herein again.

Step 905: After an identity of the certificate application device is authenticated, the IDP redirects the certificate application device back to the certificate issuance device, and carries a first public key indicating that identity authentication of the certificate application device succeeds.

Specifically, after the identity of the certificate application device is authenticated by the IDP, the IDP may redirect the certificate application device back to a code position for processing the access request by the certificate issuance device, and carry the first public key indicating that identity authentication of the certificate application device succeeds. In this way, because the IDP redirects the certificate application device back to the code position for processing the access request by the certificate issuance device, the certificate issuance device can associate the identity information corresponding to the certificate application request and included in the access request with the first public key returned by the IDP, and further determine that the first public key needs to be compared with the third public key submitted by the certificate application device in the certificate application request.

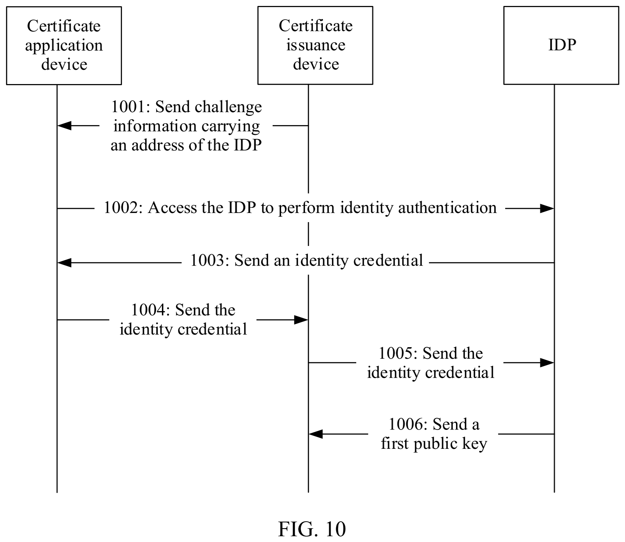

For example, FIG. 10 is another schematic flowchart in which a certificate application device performs identity authentication based on an indication of a certificate issuance device by using an IDP according to an embodiment of this application. The procedure shown in FIG. 10 includes the following steps 1001 to 1006.

Step 1001: The certificate issuance device sends challenge information to the certificate application device, where the challenge information indicates the certificate application device to perform identity authentication by using the IDP, and the challenge information carries an address of the IDP.

In this embodiment, the challenge information sent by the certificate issuance device to the certificate application device includes the address of the IDP. Therefore, the certificate application device can directly access the IDP based on the address of the IDP indicated in the challenge information.

Step 1002: The certificate application device accesses the IDP, and performs identity authentication by using the IDP.

Step 1003: After identity authentication of the certificate application device succeeds, the IDP sends an identity credential to the certificate application device.

Specifically, after identity authentication of the certificate application device succeeds, the IDP may generate a temporary identity credential. In addition, the identity credential corresponds to an authenticated identity of the certificate application device, and a public key corresponding to the authenticated identity of the certificate application device can be queried on the IDP based on the identity credential.

Step 1004: The certificate application device sends the identity credential to the certificate issuance device.

After obtaining the identity credential returned by the IDP, the certificate application device forwards the identity credential to the certificate issuance device, so that the certificate issuance device queries an identity authentication status of the certificate application device.

Step 1005: The certificate issuance device sends the identity credential to the IDP, to query the public key corresponding to the authenticated identity of the certificate application device.

Step 1006: The IDP sends a first public key to the certificate issuance device.

Because the identity credential corresponds to the authenticated identity of the certificate application device, the IDP may send, to the certificate issuance device based on the identity credential, the first public key corresponding to the authenticated identity of the certificate application device.

It should be noted that when the IDP further stores third identity information corresponding to the first public key, the IDP further returns the third identity information to the certificate issuance device.

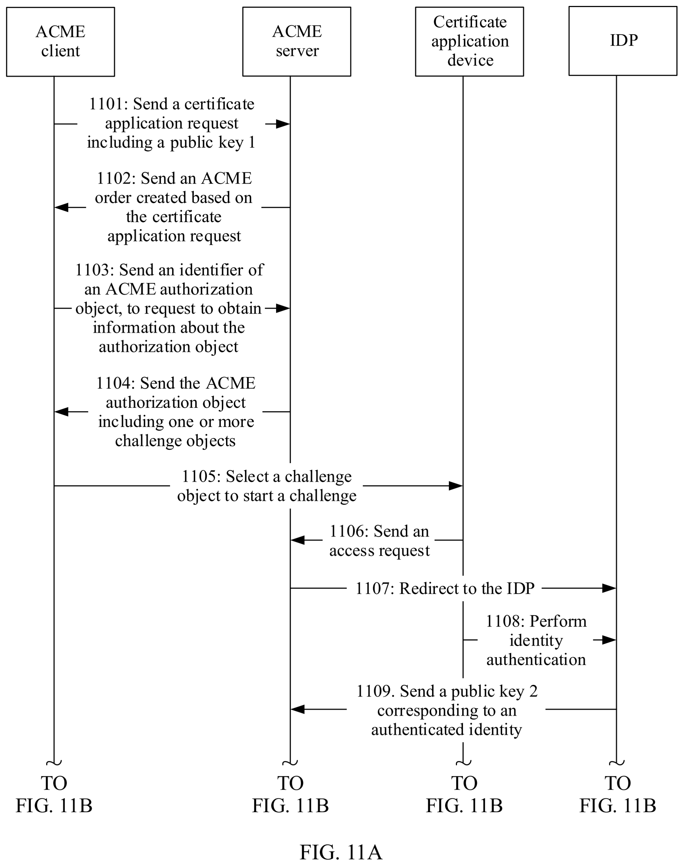

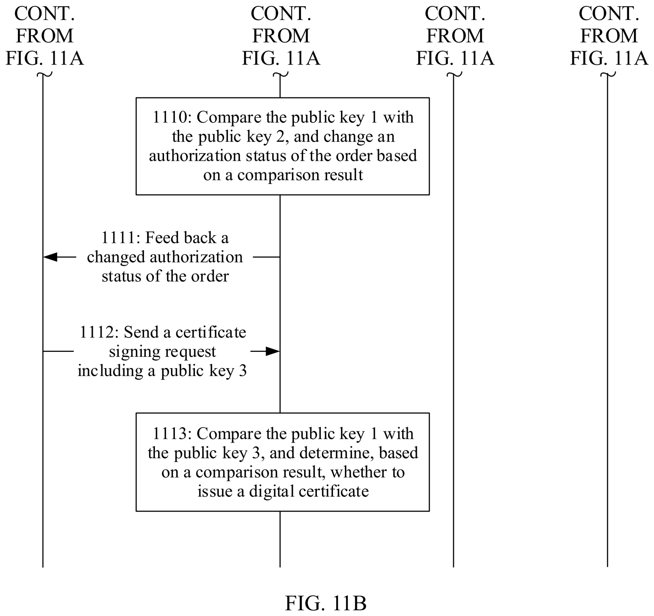

For ease of understanding, the following describes in detail, with reference to a specific example, a certificate management process performed by extending an existing ACME protocol in this embodiment. FIG. 11A and FIG. 11B are a schematic flowchart for performing a certificate management method through an extended ACME protocol according to an embodiment of this application. As shown in FIG. 11A and FIG. 11B, a process of performing the certificate management method through the extended ACME protocol includes the following steps 1101 to 1113. An ACME client is deployed on a certificate application device, and an ACME server is deployed on a certificate issuance device.

Step 1101: The ACME client sends a certificate application request to the ACME server, where the certificate application request includes a public key 1.

Compared with a certificate application request in the conventional technology, in this embodiment, a type of an identifier in the certificate application request is extended. Specifically, the type of the identifier in the certificate application request may be a public key (Public Key, pk), a certificate signing request (csr), or a self-signed certificate (selfsign-cert). When the type of the identifier is pk, a value of the identifier is a public key that the ACME client requests to be listed in a digital certificate, that is, the value of the identifier includes only the public key. When the type of the identifier is csr or selfsign-cert, the value of the identifier is a public key and identity information that the ACME client requests to be listed in the digital certificate, that is, the value of the identifier includes both the public key and the identity information.

For example, when the type of the identifier is pk, the certificate application request may carry the public key 1 by using the identifier. For example, the identifier may be specifically "identifier": {"type": "pk", "value": "MIGfMA0GC***GbQIDAQAB"}. When the type of the identifier is csr or selfsign-cert, the certificate application request may carry the public key 1 and identity information 1 by using the identifier. For example, the identifier may be specifically "identifier": {"type": "selfsign-cert", "value": "MIIHSDCC***AU1GH3xQ="}; or the identifier may be specifically: "identifier": {"type": "csr", "value": "MIICljCCA***RL64+taHbP"}.

In general, in actual application, the ACME client may determine the type of the identifier based on content that the ACME server is requested to sign in the digital certificate. If the ACME client needs to request the ACME server to sign only the public key in the digital certificate, the ACME client may use an identifier of the pk type in the certificate application request. For example, when a user has a plurality of devices and for any one of the devices, needs to apply for a digital certificate to be used only on the device, the user expects that the ACME server signs only the public key in the digital certificate applied for and does not need to present an identity of the user or device.

If the client needs to request the ACME server to sign the public key and identity information in the digital certificate, the ACME client may use an identifier of the csr or selfsign-cert type in the certificate application request. For example, when a user uses identity information of the user to apply for a digital certificate or apply for a digital certificate for a device with a specific identity, the user expects the ACME server to sign both the public key and identity information in the digital certificate applied for. In this way, the identity information of the user or device is presented in the digital certificate.

Specifically, in the certificate application request, the identity information 1 carried by the identifier may be user identity information, for example, a mobile phone number of the user, an e-mail address of the user, or a user identity; or the identity information 1 carried by the identifier may be device identity information, for example, an international mobile equipment identity (International Mobile Equipment Identity, IMEI) of a smartphone or a vehicle identification number (Vehicle Identification Number, VIN) of a vehicle.

In this embodiment, the public key 1 may correspond to the third public key in the foregoing embodiment, and the identity information 1 may correspond to the first identity information in the foregoing embodiment.

Step 1102: The ACME server creates an ACME order based on the certificate application request, and sends the created ACME order to the ACME client.

After receiving the certificate application request, the ACME server creates the ACME order based on the certificate application request, to track the digital certificate application process. The ACME order records the identifier in the certificate application request, that is, records the public key, or records the public key and the identity information.

In addition, after creating the ACME order, the ACME server further creates an authorization object based on the ACME order, and creates, based on the type of the identifier in the ACME order, a challenge object included in the authorization object. The challenge object includes content information of a challenge that needs to be performed by the ACME client.

The challenge object includes a challenge type, address information for carrying out the challenge, and information about an IDP that performs the challenge. For example, content of the challenge object may be specifically {type: "pk-01", pk url: '"', pk_provider: ""}, where type represents a challenge type of the challenge object, the challenge type of the challenge object is specifically newly defined pk-01, and pk-01 requires the ACME client to perform a pk challenge by accessing a specified "pk-url" and complete a check on control over a private key corresponding to a declared public key; pk_url indicates the address for carrying out the challenge (that is, performing identity authentication), that is, a uniform resource locator system (uniform resource locator, url), and pk-url includes sufficient information to allow the request to be associated with a specific challenge, and can point to a specific IDP; and pk_provider is an optional field used to distinguish between different IDPs.

Step 1103: The ACME client sends an identifier of the ACME authorization object in the ACME order to the ACME server, to request to obtain specific information about the ACME authorization object.

After obtaining the ACME order sent by the ACME server, the ACME client sends the identifier of the ACME authorization object to the ACME server, to request to obtain specific information about the ACME authorization object, thereby triggering an authorization process required in the digital certificate application process.

Step 1104: The ACME server sends the ACME authorization object including one or more challenge objects to the ACME client.

Specifically, through step 1103 and step 1104, the ACME client obtains each challenge object in the authorization object by querying the authorization object in the ACME order, that is, obtains all challenges supported by the authorization object.

Different challenge objects may indicate identity authentication to be completed by using different IDPs.

Step 1105: The ACME client selects a challenge object to start a challenge.

When obtaining all the challenge objects in the authorization object, the ACME client may select one of the challenge objects to perform the challenge. A manner in which the ACME client selects a challenge object may be selection based on a selection policy predefined by the user, or may be random selection. This is not specifically limited in this embodiment.

Step 1106: The certificate application device sends an access request to the ACME server based on the IDP information indicated in the challenge object.

Specifically, when the ACME client selects the challenge object, the ACME client may obtain pk url in the challenge object, that is, the address for carrying out the challenge. Therefore, the ACME client may transfer the pk_url to the certificate application device, and the certificate application device triggers inputting of the pk_url into a browser, to send the access request to the ACME server.

The pk url input by the certificate application device in the browser actually points to an address of the ACME server, but the certificate application device requests to access the IDP. The pk_url includes sufficient information. Therefore, the ACME server can associate the access request with a specific challenge and redirect the access request to the specific IDP.

Step 1107: The ACME server redirects the certificate application device to the IDP.

Step 1108: The certificate application device interacts with the IDP to perform identity authentication.

Step 1109: After identity authentication of the identity authentication device succeeds, the IDP redirects the certificate application device back to the ACME server, and carries a public key 2 indicating that identity authentication of the certificate application device succeeds.

In this embodiment, step 1107 to step 1109 are similar to step 903 to step 905. For details, refer to step 903 to step 905. Details are not described herein again.

In addition, because the IDP stores a mapping relationship between identity information and a public key, the IDP may further return, to the ACME server, identity information 2 corresponding to the public key 2, so that the ACME server performs a subsequent identity information comparison process.

In this embodiment, the public key 2 may correspond to the first public key in the foregoing embodiment, and the identity information 2 may correspond to the third identity information in the foregoing embodiment.

Step 1110: The ACME server compares whether the public key 1 in the order is the same as the public key 2 returned by the IDP, and changes an authorization status of the order based on a comparison result.

Specifically, if the public key 1 in the order is the same as the public key 2 returned by the IDP, it indicates that a public key that a certificate applicant requests to be listed in the digital certificate is the same as a public key corresponding to an identity of the certificate applicant, that is, the public key that the certificate applicant applies for signing matches the actual identity of the certificate applicant. Therefore, the ACME server can change the authorization status of the order to "authorized" based on the comparison result to trigger the subsequent certificate application procedure.

In addition, when the order includes both the public key 1 and the identity information 1, the IDP returns the public key 2 and the identity information 2 to the ACME server, and the ACME server needs to compare the public key 1 with the public key 2 and compare the identity information 1 with the identity information 2. The ACME server changes the authorization status of the order to "authorized" only when the public key 1 and the public key 2 are the same and the identity information 1 and the identity information 2 are the same.

During specific execution, the ACME server immediately sets a challenge status to "processing (processing)" after receiving, within a validity period, a response about a challenge carried out by the ACME client. If the ACME client completes identity authentication, and the ACME server determines, through comparison, that the public key declared by the ACME client is the same as the public key returned by the IDP, the challenge status is set to "valid (valid)". If the ACME client fails to complete identity authentication, or the ACME server determines, through comparison, that the public key declared by the ACME client is different from the public key returned by the IDP, the challenge status is set to "invalid (invalid)".

Specifically, the order recorded in the ACME server may be as follows:

```
           {
            "type": "pk-01",
            "url": https://example.org/acme/chall/abc123_defg456,
            "status": "pending",
            "pk url": "https://example.org/acme/start-pk",
            "pk_provider": "https://pk-identity-provider.org/"
           }
```

Step 1111: The ACME server feeds back a changed authorization status of the order to the ACME client, to indicate that the challenge is completed.

Step 1112: The ACME client sends a certificate signing request to the ACME server, where the certificate signing request includes a public key 3.

In addition, when the certificate application request sent by the ACME client includes both the public key and the identity information (that is, the type of the identifier in the certificate application request is csr or selfsign-cert), the certificate signing request sent by the ACME client further includes identity information 3, that is, the certificate signing request includes both the public key 3 and the identity information 3.

In this embodiment, the public key 3 may correspond to the second public key in the foregoing embodiment, and the identity information 3 may correspond to the second identity information in the foregoing embodiment.

Step 1113: The ACME server compares whether the public key 1 in the order is the same as the public key 3 in the certificate signing request, and determines, based on a comparison result, whether to issue the digital certificate.

Specifically, when the type of the identifier in the order is pk, if the public key 1 in the order is the same as the public key 3 in the certificate signing request, it indicates that the public key in the certificate signing request is not tampered with. Therefore, the ACME server may issue the digital certificate to the ACME client, and the public key 3 is signed in the digital certificate.

When the type of the identifier in the order is csr or selfsign-cert, if the public key 1 in the order is the same as the public key 3 in the certificate signing request, and the identity information 1 in the order is the same as the identity information 3 in the certificate signing request, it indicates that neither the public key nor the identity information in the certificate signing request is tampered with. Therefore, the ACME server can issue the digital certificate to the ACME client, and the public key 3 and identity information 3 are signed in the digital certificate.

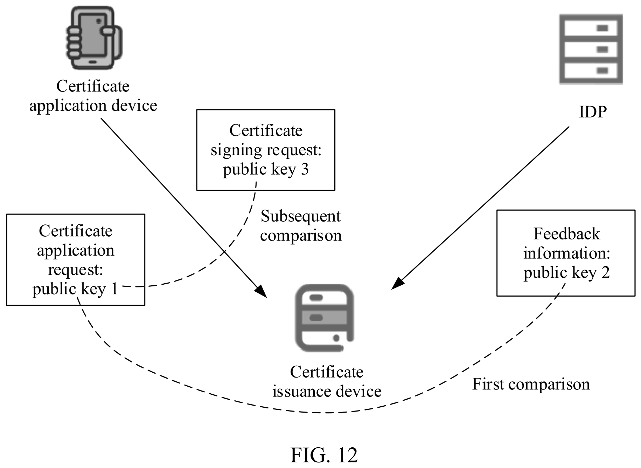

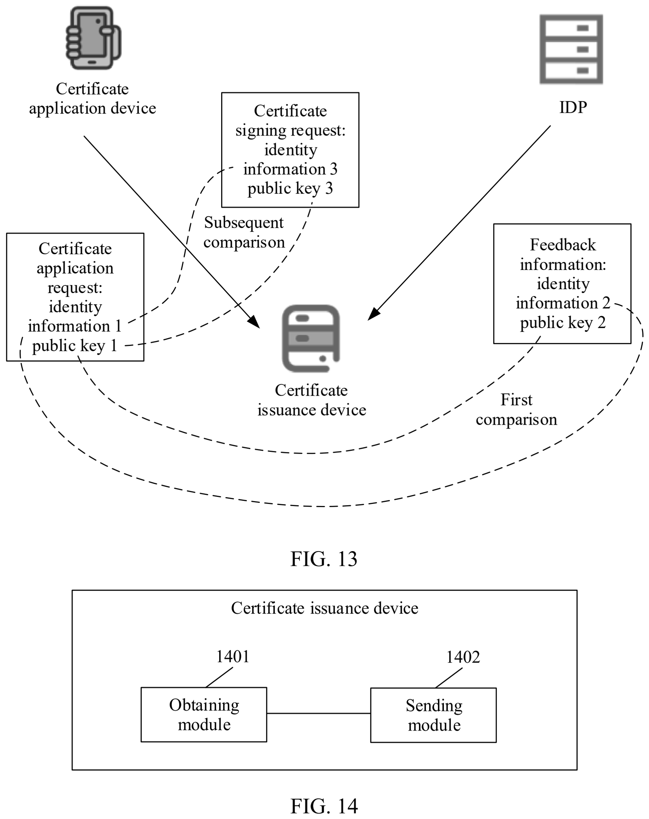

For example, refer to FIG. 12 and FIG. 13. FIG. 12 is a diagram for comparing public keys when an identifier type is pk according to an embodiment of this application. FIG. 13 is a diagram for comparing public keys and identity information when an identifier type is csr or selfsign-cert according to an embodiment of this application.

As shown in FIG. 12, when the identifier type is pk, the ACME server in the certificate issuance device first compares the public key 1 in the certificate application request with the public key 2 fed back by the IDP. When determining that the public key 1 is the same as the public key 2, the ACME server in the certificate issuance device compares the public key 1 in the certificate application request with the public key 3 in the certificate signing request. Finally, when determining that the public key 1 and the public key 3 are the same, the ACME server in the certificate issuance device issues, to the certificate application device, the digital certificate in which the public key 3 is signed.

As shown in FIG. 12, when the identifier type is csr or selfsign-cert, the ACME server in the certificate issuance device first compares the public key 1 in the certificate application request with the public key 2 fed back by the IDP, and compares the identity information 1 in the certificate application request with the identity information 2 fed back by the IDP. When determining that the public key 1 and the public key 2 are the same, and that the identity information 1 and the identity information 2 are the same, the ACME server in the certificate issuance device compares the public key 1 in the certificate application request with the public key 3 in the certificate signing request, and compares the identity information 1 in the certificate application request with the identity information 3 in the certificate signing request. Finally, when determining that the public key 1 and the public key 3 are the same, and that the identity information 1 and the identity information 3 are the same, the ACME server in the certificate issuance device issues, to the certificate application device, the digital certificate in which the public key 3 and the identity information 3 are signed.

In general, in FIG. 11A and FIG. 11B, the certificate management method provided in this embodiment is obtained by extending an existing execution procedure of the ACME protocol, and optimization is mainly performed in two processes: the challenge carried out by the certificate application device and order completion by the ACME server. In this way, the public key in the certificate signing request is not tampered with in an order completion phase of ACME, and it is ensured that the finally obtained digital certificate matches both the certificate application identity and the public key.

The foregoing mainly describes the solutions provided in embodiments of this application from the perspective of the methods. It may be understood that, to implement the foregoing functions, the electronic device includes a corresponding hardware structure and/or software module for performing each of the functions. A person skilled in the art should be easily aware that modules and algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that the module division in embodiments of this application is an example, and is merely logical function division. In actual implementation, another division manner may be used.

The following describes in detail a device configured to perform the foregoing method in embodiments of this application.

FIG. 14 is a diagram of a structure of a certificate issuance device according to an embodiment of this application. As shown in FIG. 14, the certificate issuance device provided in this embodiment includes: an obtaining module 1401, configured to obtain a certificate application request sent by a certificate application device, where the certificate application request is used to apply for a digital certificate; and a sending module 1402, configured to send challenge information to the certificate application device, where the challenge information indicates the certificate application device to perform identity authentication by using an IDP, where the obtaining module 1401 is further configured to obtain a first public key sent by the IDP, where a mapping relationship exists between the first public key and an identity corresponding to the certificate application request; the obtaining module 1401 is further configured to obtain a certificate signing request sent by the certificate application device, where the certificate signing request includes a second public key, and the certificate signing request is used to request to issue a digital certificate including the second public key; and the sending module 1402 is further configured to issue, in response to the first public key being the same as the second public key, the digital certificate including the second public key to the certificate application device.

In a possible implementation, the certificate application request includes a third public key; and the sending module 1402 is further configured to send a response message to the certificate application device in response to the third public key being the same as the first public key, where the response message indicates that identity authentication of the certificate application device succeeds, where that the first public key is the same as the second public key is determined by comparing the third public key with the second public key.

In a possible implementation, the certificate application request includes first identity information, and the certificate signing request includes second identity information; the obtaining module 1401 is further configured to obtain third identity information sent by the IDP; and the sending module 1402 is further configured to issue, in response to the first public key being the same as the second public key and the first identity information being the same as both the second identity information and the third identity information, the digital certificate including the second public key and the second identity information to the certificate application device.

In a possible implementation, the third public key and the first identity information are carried in a same identifier.

In a possible implementation, the obtaining module 1401 is further configured to obtain an access request sent by the certificate application device, where the access request is used to request to access the IDP, and the access request includes identity information corresponding to the certificate application request; and the sending module 1402 is further configured to redirect the certificate application device to the IDP.

In a possible implementation, the IDP is configured to store a mapping relationship between identity information and a public key, and the IDP is configured to verify whether the identity corresponding to the certificate application request has a private key corresponding to the first public key.

In a possible implementation, the IDP supports any one or more of the following identity authentication modes: zero-knowledge proof, public key signature, and identity authentication based on an asymmetric password-authenticated key exchange protocol.

In a possible implementation, the challenge information includes information about a plurality of IDPs, and the challenge information indicates the certificate application device to perform identity authentication by using any IDP.

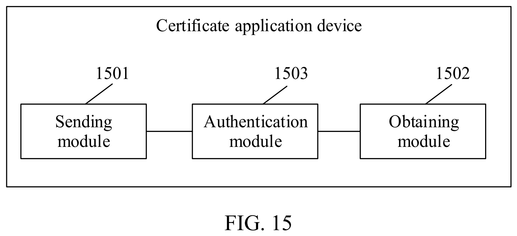

FIG. 15 is a diagram of a structure of a certificate application device according to an embodiment of this application. As shown in FIG. 15, the certificate application device includes: a sending module 1501, configured to send a certificate application request to a certificate issuance device, where the certificate application request is used to apply for a digital certificate; an obtaining module 1502, configured to obtain challenge information sent by the certificate issuance device, where the challenge information indicates to perform identity authentication by using an IDP; and an authentication module 1503, configured to perform identity authentication by using the IDP, so that the IDP determines a first public key in a mapping relationship with an identity corresponding to the certificate application request, where the sending module 1501 is further configured to send a certificate signing request to the certificate issuance device, where the certificate signing request includes a second public key, the certificate signing request is used to request to issue a digital certificate including the second public key, and the second public key is the same as the first public key; and the obtaining module 1502 is further configured to obtain the digital certificate that includes the second public key and that is sent by the certificate issuance device.

In a possible implementation, the certificate application request includes a third public key, and the third public key is the same as both the first public key and the second public key.

In a possible implementation, the certificate application request includes first identity information, the certificate signing request includes second identity information, and the first identity information is the same as the second identity information.

In a possible implementation, the third public key and the first identity information are carried in a same identifier.

In a possible implementation, the IDP is configured to store a mapping relationship between identity information and a public key; and the authentication module 1503 is specifically configured to: log in to the IDP based on the first identity information; obtain an identity authentication request sent by the IDP, where the identity authentication request is used to request to verify a private key corresponding to the first identity information; and complete identity authentication in cooperation with the IDP based on the identity authentication request.

In a possible implementation, the identity authentication request includes an identity authentication mode supported by the IDP, and the identity authentication request is used to request to perform identity authentication based on any identity authentication mode supported by the IDP; and the IDP supports any one or more of the following identity authentication modes: zero-knowledge proof, public key signature, and identity authentication based on an asymmetric password-authenticated key exchange protocol.

In a possible implementation, the challenge information includes information about a plurality of IDPs, and the challenge information indicates the certificate application device to perform identity authentication by using any IDP.

It should be noted that content such as information exchange and an execution process between modules and/or components of the apparatus is based on a same concept as the method embodiments corresponding to FIG. 7 to FIG. 13 in this application. For specific content, refer to the descriptions in the foregoing method embodiments of this application. Details are not described herein again.

It should be noted that, for specific implementations of the apparatus and beneficial effects brought by the apparatus, refer to the descriptions in the method embodiments corresponding to FIG. 7 to FIG. 13. Details are not described herein again.

An embodiment of this application further provides an electronic device, including a processor and a memory. The memory is configured to store computer instructions. When the processor executes the instructions, the electronic device is enabled to perform the method according to any one of the foregoing aspects. The electronic device may be the certificate issuance device in the embodiment corresponding to FIG. 14 or the certificate application device in the embodiment corresponding to FIG. 15.

An embodiment of this application further provides a certificate management system, including the certificate issuance device in the embodiment corresponding to FIG. 14, the certificate application device in the embodiment corresponding to FIG. 15, and an IDP.

An embodiment of this application further provides a computer-readable storage medium, including instructions. When the instructions are run on a computer, the computer is enabled to control an electronic device to perform any implementation described in the foregoing method embodiments.

An embodiment of this application further provides a computer program product. The computer program product includes computer program code. When the computer program code is run on a computer, the computer is enabled to perform any implementation described in the foregoing method embodiments.

An embodiment of this application further provides a chip system, including a memory and a processor. The memory is configured to store a computer program, and the processor is configured to invoke the computer program from the memory and run the computer program, so that the chip performs any implementation described in the foregoing method embodiments.

In addition, it should be noted that the apparatus embodiments described above are merely examples. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or may certainly be implemented by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to implement a same function may be in various forms, for example, in a form of an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, for example, a computer floppy disk, a USB flash drive, a removable hard disk, a ROM, a RAM, a magnetic disk, or an optical disc, and includes several instructions for instructing a computer device to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a communication apparatus or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

It should be understood that, "one embodiment" or "an embodiment" mentioned throughout this specification means that specific features, structures, or characteristics related to the embodiment are included in at least one embodiment of this application. Therefore, "in one embodiment" or "in an embodiment" that appears throughout this specification does not necessarily refer to a same embodiment. In addition, the specific features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, but should not be construed as any limitation on the implementation processes of embodiments of this application.

A person of ordinary skill in the art may be aware that the units and algorithm steps in the examples described with reference to the embodiments disclosed in this specification may be implemented by electronic hardware, computer software, or a combination thereof. To clearly describe the interchangeability between the hardware and the software, the foregoing has generally described compositions and steps of the examples according to functions. Whether the functions are performed by hardware or software depends on particular applications and design constraints of the technical solutions. A person skilled in the art may use different methods to implement the described functions for each particular application, but it should not be considered that the implementation goes beyond the scope of this application.

## Claims

1. A certificate management method, comprising:
obtaining a certificate application request sent by a certificate application device, wherein the certificate application request is used to apply for a digital certificate;
sending challenge information to the certificate application device, wherein the challenge information indicates the certificate application device to perform identity authentication by using an identity provider IDP;
obtaining a first public key sent by the IDP, wherein a mapping relationship exists between the first public key and an identity corresponding to the certificate application request;
obtaining a certificate signing request sent by the certificate application device, wherein the certificate signing request comprises a second public key, and the certificate signing request is used to request to issue a digital certificate comprising the second public key; and
issuing, in response to the first public key being the same as the second public key, the digital certificate comprising the second public key to the certificate application device.

2. The method according to claim 1, wherein the certificate application request comprises a third public key; and
the method further comprises:
sending a response message to the certificate application device in response to the third public key being the same as the first public key, wherein the response message indicates that identity authentication of the certificate application device succeeds, wherein
that the first public key is the same as the second public key is determined by comparing the third public key with the second public key.

3. The method according to claim 2, wherein the certificate application request comprises first identity information, and the certificate signing request comprises second identity information;
the method further comprises:
obtaining third identity information sent by the IDP; and
issuing, in response to the first public key being the same as the second public key, the digital certificate comprising the second public key to the certificate application device comprises:
issuing, in response to the first public key being the same as the second public key and the first identity information being the same as both the second identity information and the third identity information, the digital certificate comprising the second public key and the second identity information to the certificate application device.

4. The method according to claim 3, wherein the third public key and the first identity information are carried in a same identifier.

5. The method according to any one of claims 1 to 4, wherein the method further comprises:
obtaining an access request sent by the certificate application device, wherein the access request is used to request to access the IDP, and the access request comprises identity information corresponding to the certificate application request; and
redirecting the certificate application device to the IDP.

6. The method according to any one of claims 1 to 5, wherein the IDP is configured to store a mapping relationship between identity information and a public key, and the IDP is configured to verify whether the identity corresponding to the certificate application request has a private key corresponding to the first public key.

7. The method according to any one of claims 1 to 6, wherein the IDP supports any one or more of the following identity authentication modes: zero-knowledge proof, public key signature, and identity authentication based on an asymmetric password-authenticated key exchange protocol.

8. The method according to any one of claims 1 to 7, wherein the challenge information comprises information about a plurality of IDPs, and the challenge information indicates the certificate application device to perform identity authentication by using any IDP.

9. A certificate management method, comprising:
sending a certificate application request to a certificate issuance device, wherein the certificate application request is used to apply for a digital certificate;
obtaining challenge information sent by the certificate issuance device, wherein the challenge information indicates to perform identity authentication by using an IDP;
performing identity authentication by using the IDP, so that the IDP determines a first public key in a mapping relationship with an identity corresponding to the certificate application request;
sending a certificate signing request to the certificate issuance device, wherein the certificate signing request comprises a second public key, the certificate signing request is used to request to issue a digital certificate comprising the second public key, and the second public key is the same as the first public key; and
obtaining the digital certificate that comprises the second public key and that is sent by the certificate issuance device.

10. The method according to claim 9, wherein the certificate application request comprises a third public key, and the third public key is the same as both the first public key and the second public key.

11. The method according to claim 10, wherein the certificate application request comprises first identity information, the certificate signing request comprises second identity information, and the first identity information is the same as the second identity information.

12. The method according to claim 11, wherein the third public key and the first identity information are carried in a same identifier.

13. The method according to any one of claims 9 to 12, wherein the IDP is configured to store a mapping relationship between identity information and a public key; and
performing identity authentication by using the IDP comprises:
logging in to the IDP based on the first identity information;
obtaining an identity authentication request sent by the IDP, wherein the identity authentication request is used to request to verify a private key corresponding to the first identity information; and
completing identity authentication in cooperation with the IDP based on the identity authentication request.

14. The method according to claim 13, wherein the identity authentication request comprises an identity authentication mode supported by the IDP, and the identity authentication request is used to request to perform identity authentication based on any identity authentication mode supported by the IDP; and
the IDP supports any one or more of the following identity authentication modes: zero-knowledge proof, public key signature, and identity authentication based on an asymmetric password-authenticated key exchange protocol.

15. The method according to any one of claims 9 to 14, wherein the challenge information comprises information about a plurality of IDPs, and the challenge information indicates the certificate application device to perform identity authentication by using any IDP.

16. A certificate issuance device, comprising:
an obtaining module, configured to obtain a certificate application request sent by a certificate application device, wherein the certificate application request is used to apply for a digital certificate; and
a sending module, configured to send challenge information to the certificate application device, wherein the challenge information indicates the certificate application device to perform identity authentication by using an IDP, wherein
the obtaining module is further configured to obtain a first public key sent by the IDP, wherein a mapping relationship exists between the first public key and an identity corresponding to the certificate application request;
the obtaining module is further configured to obtain a certificate signing request sent by the certificate application device, wherein the certificate signing request comprises a second public key, and the certificate signing request is used to request to issue a digital certificate comprising the second public key; and
the sending module is further configured to issue, in response to the first public key being the same as the second public key, the digital certificate comprising the second public key to the certificate application device.

17. The device according to claim 16, wherein the certificate application request comprises a third public key; and
the sending module is further configured to send a response message to the certificate application device in response to the third public key being the same as the first public key, wherein the response message indicates that identity authentication of the certificate application device succeeds, wherein
that the first public key is the same as the second public key is determined by comparing the third public key with the second public key.

18. The device according to claim 17, wherein the certificate application request comprises first identity information, and the certificate signing request comprises second identity information;
the obtaining module is further configured to obtain third identity information sent by the IDP; and
the sending module is further configured to issue, in response to the first public key being the same as the second public key and the first identity information being the same as both the second identity information and the third identity information, the digital certificate comprising the second public key and the second identity information to the certificate application device.

19. The device according to claim 18, wherein the third public key and the first identity information are carried in a same identifier.

20. The device according to any one of claims 16 to 19, wherein
the obtaining module is further configured to obtain an access request sent by the certificate application device, wherein the access request is used to request to access the IDP, and the access request comprises identity information corresponding to the certificate application request; and
the sending module is further configured to redirect the certificate application device to the IDP.

21. The device according to any one of claims 16 to 20, wherein the IDP is configured to store a mapping relationship between identity information and a public key, and the IDP is configured to verify whether the identity corresponding to the certificate application request has a private key corresponding to the first public key.

22. The device according to any one of claims 16 to 21, wherein the IDP supports any one or more of the following identity authentication modes: zero-knowledge proof, public key signature, and identity authentication based on an asymmetric password-authenticated key exchange protocol.

23. The device according to any one of claims 16 to 22, wherein the challenge information comprises information about a plurality of IDPs, and the challenge information indicates the certificate application device to perform identity authentication by using any IDP.

24. A certificate application device, comprising:
a sending module, configured to send a certificate application request to a certificate issuance device, wherein the certificate application request is used to apply for a digital certificate;
an obtaining module, configured to obtain challenge information sent by the certificate issuance device, wherein the challenge information indicates to perform identity authentication by using an IDP; and
an authentication module, configured to perform identity authentication by using the IDP, so that the IDP determines a first public key in a mapping relationship with an identity corresponding to the certificate application request, wherein
the sending module is further configured to send a certificate signing request to the certificate issuance device, wherein the certificate signing request comprises a second public key, the certificate signing request is used to request to issue a digital certificate comprising the second public key, and the second public key is the same as the first public key; and
the obtaining module is further configured to obtain the digital certificate that comprises the second public key and that is sent by the certificate issuance device.

25. The device according to claim 24, wherein the certificate application request comprises a third public key, and the third public key is the same as both the first public key and the second public key.

26. The device according to claim 25, wherein the certificate application request comprises first identity information, the certificate signing request comprises second identity information, and the first identity information is the same as the second identity information.

27. The device according to claim 26, wherein the third public key and the first identity information are carried in a same identifier.

28. The device according to any one of claims 24 to 27, wherein the IDP is configured to store a mapping relationship between identity information and a public key; and
the authentication module is specifically configured to:
log in to the IDP based on the first identity information;
obtain an identity authentication request sent by the IDP, wherein the identity authentication request is used to request to verify a private key corresponding to the first identity information; and
complete identity authentication in cooperation with the IDP based on the identity authentication request.

29. The device according to claim 28, wherein the identity authentication request comprises an identity authentication mode supported by the IDP, and the identity authentication request is used to request to perform identity authentication based on any identity authentication mode supported by the IDP; and
the IDP supports any one or more of the following identity authentication modes: zero-knowledge proof, public key signature, and identity authentication based on an asymmetric password-authenticated key exchange protocol.

30. The device according to any one of claims 24 to 29, wherein the challenge information comprises information about a plurality of IDPs, and the challenge information indicates the certificate application device to perform identity authentication by using any IDP.

31. A certificate management system, comprising the certificate issuance device according to claims 16 to 23, the certificate application device according to claims 24 to 30, and an IDP.

32. A computer storage medium, wherein the computer storage medium stores instructions, and when the instructions are executed by a computer, the computer is enabled to implement the method according to any one of claims 1 to 15.

33. A computer program product, wherein the computer program product stores instructions, and when the instructions are executed by a computer, the computer is enabled to implement the method according to any one of claims 1 to 15.
